# EUROPÄISCHE PATENTSCHRIFT

(11) **EP 2 959 195 B1**
(45) Veröffentlichungstag und Bekanntmachung des Hinweises auf die Patenterteilung: **10.04.2019**
(21) Anmeldenummer: 14712201.4
(22) Anmeldetag: 18.02.2014
(51) Int. Cl.: F16J 15/06, F16J 15/10

(54) **VERFAHREN ZUR HERSTELLUNG EINES DICHTUNGSELEMENTES**
METHOD FOR PRODUCING A SEALING ELEMENT
PROCÉDÉ DE FABRICATION D'UN ÉLÉMENT D'ÉTANCHÉITÉ

(30) Priorität: 19.02.2013 DE 102013002753
(43) Veröffentlichungstag der Anmeldung: 30.12.2015
(73) Patentinhaber: Fachhochschule Münster, 48149 Münster (DE)
(72) Erfinder: RIEDL, Alexander, 48565 Steinfurt (DE)
(74) Vertreter: Cohausz Hannig Borkowski Wißgott
(86) Internationale Anmeldenummer: PCT/EP2014/000438
(87) Internationale Veröffentlichungsnummer: WO 2014/127911

(56) Entgegenhaltungen:
- EP-A1- 0 485 693
- EP-A1- 0 506 996
- DE-A1- 1 923 482
- DE-A1- 4 036 255
- DE-A1- 4 142 600
- DE-A1- 10 221 731
- US-A- 5 391 333

## Beschreibung

Die Erfindung betrifft ein Verfahren zur Herstellung eines Dichtungselementes, insbesondere eines Dichtungsringes, zur Dichtung einer Verbindung von zwei Flanschen, von denen wenigstens einer eine nicht-plane Dichtfläche aufweist.

Dichtungen werden allgemein verwendet, wenn beispielsweise Flansche, die typischerweise in der chemischen, der petrochemischen, der kraftwerkstechnischen oder der pharmazeutischen Industrie eingesetzt werden, dicht miteinander verbunden werden sollen. Dichtungselemente sind immer dann erforderlich, wenn Unebenheiten der einander gegenüberliegenden Dichtflächen der beteiligten Flansche bei zumindest einem der Flansche vorliegen, was regelmäßig der Fall ist.

Der Zweck eines solchen Dichtungselementes ist es, dass sich dieses Dichtelement bei der Montage soweit plastisch, elasto-plastisch oder elastisch verformt, dass bestehende Unebenheiten der wenigstens einen Dichtfläche ausgeglichen werden. Aus diesem Grund besteht ein Dichtungselement häufig aus einem weicheren Werkstoff, als das Flanschmaterial.

Problematisch ist es, dass sehr große Unebenheiten bei wenigstens einer Dichtfläche der beteiligten Flansche oder sich insgesamt aufsummierte Unebenheiten bei beiden beteiligten Dichtflächen sich nicht mehr mit herkömmlichen Dichtungen ausgleichen lassen, insbesondere wenn solche Unebenheiten größer als 10 mm sind.

Solche großen Unebenheiten können beispielsweise durch starke thermische Belastungen bei der Herstellung von Flanschen auftreten, insbesondere wenn es sich um Flansche aus Stahl handelt, welche einen Emaille-Überzug aufweisen, beispielsweise um eine chemische Beständigkeit zu erzielen.

Der Auftrag der Emaillebeschichtung erfordert ein starkes Beheizen der zu emaillierenden Bauteile und somit auch der Flansche, so dass ein starker Verzug der Bauteile und somit auch der Flansche auftreten kann, wodurch selbst eine beispielsweise ursprünglich plan hergestellte Dichtungsfläche eines Flansches nach dem Auftragen der Emailleschicht, erhebliche Unebenheiten, beispielsweise von größer 10 mm aufweisen kann.

Bisher bestand die Notwendigkeit, bei derart stark auftretenden Unebenheiten mangels der Verfügbarkeit geeigneter Dichtungen, eine erneute Emaillierung durchzuführen, hierfür die alte Emailleschicht abzutragen, gegebenenfalls die Dichtflächen einzuebnen und neu zu beschichten.

Unebenheiten dieser Größenordnung können jedoch nicht nur bei thermischer Belastung der Flansche auftreten, sondern beispielsweise auch durch Alterungseffekte und dadurch bedingtes Verziehen der Flansche oder daran angrenzender Bauteile.

Es ist somit eine Aufgabe der Erfindung ein Verfahren bereitzustellen, mit dem Dichtungselemente zur dichtenden Verbindung von zwei Flanschen bereitgestellt werden können, von denen wenigstens einer der Flansche eine nicht-plane Dichtfläche aufweist. Somit ist es im Wesentlichen eine Aufgabe der Erfindung durch das Verfahren Dichtungselemente, insbesondere Dichtringe bereitzustellen, die geeignet sind, um Unebenheiten von mehr als 10 mm zwischen den Dichtflächen der beteiligten Flansche auszugleichen.

Diese Aufgabe wird erfindungsgemäß dadurch gelöst, dass an einer Vielzahl von in Umfangsrichtung wenigstens eines Flansches, bevorzugt beider Flansche liegenden Umfangspositionen, insbesondere die zueinander äquidistant liegen, bei jeder der Umfangspositionen an mehreren Orten, die in einer Richtung senkrecht zur Umfangstangente und somit bei Dichtungsringen, beispielsweise in radialer Richtung hintereinander liegen, ein jeweiliger Abstandswert zwischen den einander gegenüberliegenden Dichtflächen der Flansche bestimmt wird und aus den mehreren Abstandswerten jeder Umfangsposition ein Dickenwert ermittelt wird und in Abhängigkeit aller von der Umfangsposition abhängiger Dickenwerte ein Dichtungselement gefertigt wird, welches eine von der Umfangsposition abhängige Dicke aufweist, die an jeder zu den Flanschen korrespondierenden Umfangsposition in einer Richtung senkrecht zur Umfangstangente, insbesondere somit in radialer Richtung konstant ist und dem ermittelten Dickenwert der jeweiligen Umfangsposition entspricht.

Somit ist es ein wesentlicher Kerngedanke der Erfindung, Abstandswerte zwischen den Dichtflächen der Flansche zu bestimmen und somit die hierdurch konkret ermittelten Unebenheiten bei der Fertigung eines Dichtungselementes zu berücksichtigen.

Dabei ist es jedoch ein wesentlicher Kerngedanke der Erfindung, die in den Dichtungsflächen der beteiligten Flansche auftretenden Unebenheiten nicht als Negativkopie auf ein Oberflächenprofil eines herzustellenden Dichtungselementes zu übertragen, da dies zu einem vollflächigen Kontakt zwischen dem Dichtungselement und den Dichtflächen der beteiligten Flansche führen würde, was zum Erzielen einer dichten Verbindung der Flansche extrem hohe Verbindungskräfte bedingen würde, vielmehr ist es gemäß der Erfindung vorgesehen, aus den mehreren Abstandswerten jeder Umfangsposition nur einen einzigen Dickenwert zu ermittelten, welcher der Dicke entspricht, mit der ein zu fertigendes Dichtungselement an einer korrespondierenden Umfangsposition hergestellt wird, wobei diese Dicke sodann erfindungsgemäß in der vorgenannten senkrechten Richtung zur Umfangstangente konstant ist, was bedeutet, dass bei der herzustellenden Flanschverbindung eine Linienpressung des Dichtungselementes zwischen den Dichtflächen der Flansche erzielt werden kann, was eine bessere Dichtigkeit im Vergleich zur Flächenpressung ermöglicht.

Bezüglich des erfindungsgemäßen Verfahrens ist darauf hinzuweisen, dass die ermittelten Abstandswerte nicht zwingend den Abständen entsprechen müssen, die zwischen den Dichtflächen der beiden Flansche vorliegen würden, wenn die beiden Flansche bei einer hergestellten Verbindung inklusive eines Dichtelementes aneinander befestigt sind. Zwar können die ermittelten Abstandswerte genau solche Abstände beschreiben, es kann jedoch auch vorgesehen sein, dass die Abstandswerte solche Werte repräsentieren, die vorliegen, wenn die beiden beteiligten Flansche in einem größeren Abstand zueinander positioniert sind, als es bei einer Befestigung unter Zwischenfügung einer geeigneten Dichtung der Fall wäre.

Es kann nämlich in einer bevorzugten erfindungsgemäßen Verfahrensvariante vorgesehen sein, dass ein jeder der zuvor genannten Dickenwerte aus den jeweiligen Abstandswerten zuzüglich oder abzüglich einer Konstanten berechnet wird.

Nimmt man demnach beispielsweise an, dass die beiden Flansche mit ihren Dichtflächen bei der Ermittlung der Abstandswerte einander kontaktieren oder wenigstens einen Abstandswert zwischen den Dichtflächen aufweisen, der kleiner als eine benötigte Mindestdicke einer anzufertigenden Dichtungselementes ist, so kann ein Dickenwert jeder Umfangsposition aus den jeweiligen Abstandswerten zuzüglich einer Konstanten zur Erzielung dieser Mindestdicke des Dichtungselementes berechnet werden, damit ein zu fertigendes Dichtungselement beispielsweise an seiner dünnsten Stelle mindestens diese Mindestdicke aufweist.

Ebenso kann es erfindungsgemäß vorgesehen sein, dass für die Ermittlung der Abstandswerte die beiden Flansch einander gegenüberliegend in einem Abstand positioniert werden, der größer ist, als eine benötigte oder erlaubte Maximaldicke eines später zwischenzufügenden und verfahrensgemäß herzustellenden Dichtungselementes, so dass ein benötigter Dickenwert jeder Umfangsposition einer später herzustellenden Dichtung aus den jeweiligen Abstandswerten abzüglich eines konstanten Wertes berechnet werden kann, um so eine gewünschte Mindestdicke oder mittlere Dicke oder maximale Dicke des später herzustellenden Dichtungselementes zu erzielen.

Insbesondere ist auch darauf hinzuweisen, dass als Abstandswerte auch solche Werte ermittelt werden können, die vorliegen würden, wenn die beiden später zu verbindenden Flansche in einem bestimmten Abstand zueinander angeordnet würden, konkret jedoch für die erfindungsgemäße Ermittlung gar nicht einander gegenüberliegend angeordnet sind, wie es an einem Ausführungsbeispiel nachfolgend noch beschrieben wird.

Es kann demnach erfindungsgemäß vorgesehen sein, dass die vorgenannten mehreren Abstandswerte jeder Umfangsposition zwischen den Dichtflächen der Flansche demnach konkret gemessen werden, wofür in einer solchen Ausführung sodann die beiden beteiligten Flansche einander gegenüberliegend mit einem, insbesondere beliebigen Abstand anzuordnen sind, wobei jedoch ebenso die Möglichkeit besteht, die Abstandswerte aus anderen Werten zu ermitteln, die nicht direkt den konkreten Abständen zwischen den Dichtflächen der beteiligten Flansche entsprechen, sondern zum Beispiel nur Abständen zwischen der Dichtungsfläche eines der Flansche und einer zu betrachtenden Referenzebene.

Unabhängig von der Art der konkreten Ermittlung der mehreren Abstandswerte an jeder der Umfangspositionen, aus denen ein jeweiliger Dickenwert für die Fertigung des Dichtungselementes bestimmt wird, kann es vorgesehen sein, dass aus den Abstandswerten jeder Umfangsposition in einer möglichen Ausführung ein Dickenwert ermittelt wird, durch Bildung des Mittelwertes aller Abstandswerte der jeweiligen Umfangsposition oder in einer anderen, dem gegenüber bevorzugten Ausführung, durch Auswahl des Minimums aller Abstandswerte der jeweiligen Umfangsposition.

Insbesondere dann, wenn die einzelnen Abstandswerte einer jeden Umfangsposition nicht mit einer genügend hohen Genauigkeit ermittelbar sind, kann die Bildung des Mittelwertes aller Abstandswerte einer jeweiligen Umfangsposition zur Bestimmung eines Dickenwertes ein bereits zufriedenstellendes Ergebnis für die Fertigung einer Dichtung erzielen.

Hingegen hat die Auswahl des Minimums aus allen Abstandswerten der jeweiligen Umfangsposition als Grundlage zur Ermittlung eines zu verwendenden Dickenwerts dieser Umfangsposition den Vorteil, dass ein hiernach hergestelltes Dichtungselement innerhalb seiner Dichtungsbreite immer am Ort der höchsten Verpressung beziehungsweise des engsten Spaltes zwischen den beteiligten Dichtflächen der Flansche von diesen Dichtflächen kontaktiert wird und demnach aus der Kontaktlinie der höchsten Verpressung heraus, Material des Dichtungselementes in umgebende Bereiche verpresst werden kann, was eine besonders dichte Verbindung der Flansch gewährleistet.

Das erfindungsgemäße Verfahren sieht vor, den Umfang wenigstens eines Flansches beziehungsweise beider Flansche in bevorzugter Ausführung in diskreten Schritten zu unterteilen und so eine Vielzahl von Umfangspositionen zu definieren, an denen die Abstandswerte in einer Richtung senkrecht zur Umfangstangenten an der jeweiligen Umfangsposition, bei einer ringförmigen Dichtung demnach in radialer Richtung ermittelt werden. Die Umfangspositionen müssen nicht zwingend Orte direkt auf dem Umfang eines Flansches definieren. Wesentlich für die Erfindung ist es, dass die Umfangspositionen genau die Linie definieren, auf denen die mehreren Orte liegen, an denen zwischen den Dichtflächen der beiden Flansche die Abstandswerte bestimmt werden.

Bevorzugt bei einer kreisrunden ringförmigen Dichtung, jedoch grundsätzlich bei allen Dichtungselement-Formen können die Umfangspositionen z.B. Winkelwerte zwischen 0 und 360 Grad bezogen auf den Mittelpunkt des Dichtungselementes bzw. des wenigstens einen Flansches darstellen. Jeder Winkelwert definiert sodann den vom Mittelpunkt ausgehenden Radiusvektor, auf dem die Orte zwischen den Dichtflächen der Flansche liegen, an denen die Abstandswerte ermittelt werden. In diesem Fall können somit Umfangspositionen eine Koordinate eines polaren Koordinatensystems darstellen, in dem sowohl die Flansche als auch das zu fertigende Dichtungselement betrachtet werden.

Z.B. bei von der ringförmigen Form abweichenden Dichtungselementen, z.B. bei eckigen Dichtungselementen können die Umfangspositionen auch in kartesischen Koordinaten gegeben sein.

Es liegen selbst bei einer sehr großen Anzahl von Umfangspositionen lediglich diskrete, zueinander beabstandete Umfangspositionen vor, zu denen ein Dickenwert für die später herzustellende Dichtung bestimmt wird. Da es erfindungsgemäß vorgesehen ist, ein Dichtungselement an seinen zu den Flanschen korrespondierenden Umfangspositionen mit diesen ermittelten Dickenwerten herzustellen, könnte es eine Ausführung vorsehen, dass sich in Umfangsrichtung des Dichtungselementes ein hinsichtlich der Dicke des Dichtungselementes gestufter Aufbau ergibt, wobei der Abstand der Stufen dem Abstand der einzelnen Umfangspositionen zueinander in Umfangsrichtung entsprechen würde.

Um einen solchen gestuften Aufbau in Umfangsrichtung zu vermeiden, kann es vorgesehen sein, dass in der Umfangsrichtung des herzustellenden Dichtungselementes dessen Dicke zwischen zwei zu den Flanschen korrespondierenden und benachbarten Umfangspositionen in Abhängigkeit der Dickenwerte an diesen beiden jeweiligen Umfangspositionen angepasst wird, beispielsweise durch einen in Umfangsrichtung monoton steigenden oder fallenden Dickenverlauf.

Ebenso kann es vorgesehen sein, zwischen den Dickenwerten der jeweiligen Umfangspositionen die erfindungsgemäß ermittelt wurden, eine andere Anpassung vorzunehmen, beispielsweise auch durch einen mathematischen Fit eines Polynoms oder einer sonstigen Funktion zur Angleichung der Dickenwerte in den Bereichen zwischen den diskreten Umfangspositionen.

Es kann so in Umfangsrichtung ein Dichtungselement ohne gestuften, insbesondere mit einem gleichmäßigen Dickenverlauf hergestellt werden, dessen Dicke in der eingangs genannten Richtung senkrecht zur Umfangstangenten, also beispielsweise in der radialen Richtung bei einem ringförmigen Dickenelement jeweils konstant ist.

Das erfindungsgemäße Verfahren kann weiterhin vorsehen, dass die mehreren Abstandswerte jeder Umfangsposition zusammen mit einem jeweiligen Koordinatenwert erfasst werden, welche den Ort der Bestimmung des Abstandswertes in der Richtung senkrecht zur Umfangstangente identifiziert. Besonders bei einem ringförmigen Dichtungselement und somit kreisförmig ausgebildeten Flanschen, kann es hier vorgesehen sein, dass dieser Koordinatenwert den Abstand des Ortes der Bestimmung vom Mittelpunkt des Flansches und somit dem Mittelpunkt der später herzustellenden Dichtung identifiziert, somit also der Radiuskoordinate entspricht. Jeder Ort, an dem ein Abstandswert ermittelt wird, könnte somit z.B. durch eine Polarkoordinate festgelegt sein, nämlich durch Umfangsposition als Winkelwert und die genannte Radiuskoordinate, wobei erfindungsgemäß zu jedem Winkelwert bei mehreren Radiuskoordinaten die Abstandswerte ermittelt werden.

Es kann erfindungsgemäß vorgesehen sein, in Abhängigkeit wenigstens eines der Koordinatenwerte, insbesondere Radiuswerts den minimalen inneren Querschnitt des herzustellenden Dichtungselementes und/oder in Abhängigkeit wenigstens eines der Koordinatenwerte den Außenquerschnitt des Dichtungselementes festzulegen.

Bei einem ringförmigen Dichtungselement kann der Außendurchmesser sowie der freie Innendurchmesser anhand dieser Koordinatenwerte bestimmt werden. Beispielsweise kann es hierfür vorgesehen sein, den minimalen Koordinatenwert (Radiuswert) zu verwenden, der unter allen Koordinatenwerten bestimmt wird, die an jeder Umfangsposition den Ort des minimalen Abstandswertes zwischen den Dichtungsflächen identifizieren, um hieraus, beispielsweise unter Berücksichtigung eines Offsets, insbesondere eines negativen Offsets, den inneren Durchmesser zu bestimmen.

In gleicher Weise kann aus dem Maximum aller Koordinatenwerte (Radiuswerte) an denen bei den jeweiligen Umfangspositionen der jeweilige minimale Abstand zwischen den Dichtflächen ermittelt wurde, insbesondere unter Berücksichtigung eines bevorzugt positiven Offsets der benötigte Außendurchmesser eines Dichtungselementes bestimmt werden.

Das erfindungsgemäße Verfahren kann es im Wesentlichen vorsehen, eine Schar von Wertepaaren zu bilden, wobei ein jeweiliges Wertepaar eine Umfangsposition umfasst (bei einem kreisförmig herzustellenden Dichtungselement, beispielsweise einen Winkelwert) und einen zu dieser Umfangsposition zugeordneten Dickenwert. Eine solche Schar von Wertepaaren, wobei die Anzahl der Paare demnach der Anzahl der berücksichtigten Umfangspositionen entspricht, kann verwendet werden, um zum Beispiel numerisch gesteuert, ein Dichtungselement herzustellen.

Beispielsweise kann ein Dichtungselement aus einem beidseitig planen Dichtungsrohling durch Abtragen von Material, insbesondere durch spanendes Abtragen hergestellt werden, wobei eine Ausführung vorsehen kann, dass ein solcher Abtrag nur von einer Seite erfolgt, bis auf eine Dicke hinab, die an jeder zu den Flanschen korrespondierenden Umfangsposition des Dichtungselementes dem Dickenwert dieser Umfangsposition entspricht.

Ebenso kann es vorgesehen sein, bezogen auf den Dichtungsrohling einen beidseitigen Abtrag von Material vorzunehmen, es zeigt sich jedoch, dass aufgrund der Flexibilität üblicher Dichtungsmaterialien ein solches beidseitiges Abtragen entbehrlich ist.

Eine Alternative kann auch vorsehen, ein Dichtungselement durch konstruktiven Materialauftrag entsprechend der ermittelten Dicke an jeder Umfangsposition herzustellen. Beispielsweise könnte hier thermoplastische z.B. elastomere Materialien verwendet werden, um diese nach einem Aufheizen in der bei jeder Umfangsposition benötigten Dicke auf einer Bauplattform aufzutragen und hierdurch das Dichtungselement auszubilden.

Das erfindungsgemäße Verfahren kann es vorsehen, die Ermittlung der mehreren Abstandswerte an den jeweiligen Umfangspositionen auf verschiedenen Arten vorzunehmen.

Eine Ausführungsform kann es vorsehen, dass zwischen zwei konkret miteinander zu verbindenden Flanschen, durch Befestigung der Flansche aneinander, ein zwischen den Dichtflächen der Flansche angeordnetes plastisches Material verpresst wird, wodurch ein Abdruck des Abstandsbereiches zwischen den Dichtflächen erzeugt wird und wobei nach Entfernen des Abdruckes beziehungsweise des den Abdruck bildenden Materiales zwischen den Dichtflächen von dem Abdruck an jeder der Umfangspositionen die jeweiligen Abstandswerte ermittelt werden. Hierfür wird der Abdruck zumindest messtechnisch im selben Koordinatensystem betrachtet wie die Flansche, um hinsichtlich der Umfangspositionen eine Übereinstimmung zu schaffen.

Dies kann beispielsweise dadurch erfolgen, dass die Dicke des Abdruckes an jeder korrespondierenden Umfangsrichtung in der Richtung senkrecht zur Umfangstangenten an dieser Position wie eingangs genannt, an mehreren Orten ausgemessen wird, insbesondere in Verbindung mit einer Koordinatenposition des jeweiligen Messortes bezogen auf diese genannte Richtung. Orte, an denen die Dicke gemessen wird sind nur solche, die am Abdruck zwischen den Dichtflächen liegen. Jede am Abdruck gemessene Dicke entspricht dabei unmittelbar einem Abstandswert der Flanschdichtflächen zueinander. In diesem Fall bedeutet somit das Ermitteln der Abstandswerte ein Messen der Abstandswerte.

Aus den mehreren Abstandswerten bei einer jeweiligen korrespondierenden Umfangsposition kann demnach wie zuvor beschrieben entweder durch Mittelwertbildung oder durch Suchen des minimalen Abstandswertes und somit der kleinsten Abdruckdicke das erfindungsgemäße Verfahren durchgeführt werden, d.h. ein Dickenwert für die herzustellende Dichtung ermittelt werden, ggfs. unter Berücksichtigung eines zu addierenden oder zu subtrahierenden konstanten Wertes.

Um das Herstellen eines Abdruckes zum Zweck des konkreten Ausmessens der mehreren Abstandswerte an den Umfangspositionen zu vermeiden, kann eine alternative Ausführungsform auch vorsehen, dass die beiden konkret miteinander zu verbindenden Flansche mit Abstandshaltern aneinander in einem insbesondere beliebigen Abstand befestigt werden, wobei es hierbei vorgesehen sein kann, drei Abstandshalter zu verwenden, um eine Dreipunkt-Auflage der Dichtflächen aneinander zu realisieren und so eine sichere Befestigung der Flansche aneinander für die Durchführung des erfindungsgemäßen Verfahrens zu erzielen.

Hierbei kommt es, wie eingangs benannt, nicht auf die Einhaltung eines bestimmten Abstandes zwischen den Dichtflächen der aneinander befestigten Flansche an, da die ermittelten Abstandswerte unter Berücksichtigung einer Konstante in die benötigten Dickenwerte für die Herstellung einer konkreten Dichtung umgerechnet werden können.

Bei einer derartigen konkreten Anordnung der später mit der hergestellten Dichtung zu verbindenden Flansche kann es nun vorgesehen sein, mit einer Messvorrichtung an jeder der Umfangspositionen die mehreren Abstandswerte zu messen.

Beispielsweise kann eine tastende Messvorrichtung verwendet werden, die an jeder Umfangsposition in einer Richtung senkrecht zur Umfangstangente an dieser Umfangsposition, bei kreisförmigen Flanschen demnach beispielsweise in radialer Richtung zwischen die Dichtflächen der Flansche geführt wird, um die Abstände zwischen den Dichtflächen an mehreren, in dieser Richtung hintereinander liegenden Orten zu messen.

Aus diesen mehreren Abstandswerten zu jeder Umfangsposition kann, wie zuvor beschrieben, durch Mittelwertbildung oder Aufsuchen des Minimalwertes sowie gegebenenfalls einer hinzuzuaddierenden oder abzuziehenden Konstante, ein Dickenwert für die später herzustellende Dichtung bestimmt werden.

Ebenso ist darauf hinzuweisen, dass statt einer tastenden Messvorrichtung auch an jeder Umfangsposition eine Messvorrichtung zwischen die Dichtflächen der Flansche geführt werden kann, mit der die mehreren Abstandswerte optisch und somit berührungslos bestimmt werden. Beispielsweise kann hierfür ein Laserabstandsmesser in Kontakt zu der Dichtfläche eines der Flansche gebracht werden, um den Laserstrahl sodann in die Richtung der gegenüberliegenden Dichtfläche auszurichten und einen jeweiligen Abstandswert zu messen.

Eine wiederum andere Lösung kann es vorsehen, dass bei der zuvor beschriebenen konkreten Anordnung der beiden Flansche in einem Abstand zueinander ein beispielsweise in Polarkoordinaten messender Laserscanner als Messvorrichtung zwischen den Flanschen angeordnet wird, beispielsweise auf deren mittigen Verbindungsachse.

Ein solcher Laserscanner kann, bezogen auf den Mittelpunkt des ihm zugrundeliegenden Koordinatensystems die jeweiligen Polarkoordinaten der Oberflächen von den beiden Dichtflächen der einander gegenüberliegenden Flansche ausmessen und aus den so gebildeten Messwerten die erfindungsgemäß benötigten Abstandswerte zwischen einander gegenüberliegenden Orten auf beiden Flanschdichtungsflächen für die Vielzahl der Umfangspositionen bestimmen.

Wie bereits eingangs angedeutet kann es auch vorgesehen sein, die Ermittlung der erfindungsgemäß benötigten mehreren Abstandswerten an der Vielzahl der Umfangspositionen nicht durch eine konkrete Abstandsmessung zwischen den Dichtflächen der einander gegenüberliegend angeordneten Flansche vorzunehmen, sondern es kann eine alternative Ausgestaltung des Verfahrens auch vorsehen, dass an den Umfangspositionen in einer Richtung senkrecht zur Umfangstangente mehrere Abstandswerte zwischen der Dichtfläche eines der Flansche und einer planen Referenzebene ermittelt werden.

Beispielsweise kann eine solche erfindungsgemäße Ausführung eingesetzt werden, wenn einer der Flansche eine genügend plane Dichtfläche aufweist, so dass das Bestimmen der Abstandswerte gegenüber einer planen Referenzebene statt der zweiten Dichtfläche des als im Wesentlichen plan betrachteten Flanschens eine genügende Genauigkeit bei der Bestimmung der benötigten Dickenwerte liefert. Für die Ermittlung von Abstandswerten zwischen Dichtfläche eines Flansches und einer planen Referenzebene kann es vorgesehen sein, dass eine Messvorrichtung an dem verfahrensgemäß zu vermessenden Flansch befestigt wird, welche die Referenzebene selbst umfasst oder diese zumindest definiert, wobei sodann die ermittelten Abstandswerte zwischen Dichtfläche und Referenzebene umgerechnet werden können in Abstandswerte zwischen den Dichtflächen beider Flansche.

Insbesondere dann, wenn von einer genügend planen Ausbildung wenigstens eines der beteiligten Flansche nicht ausgegangen werden kann, kann das erfindungsgemäße Verfahren auch vorsehen, die Vermessung eines Flansches relativ zu einer planen Referenzebene jeweils für beide beteiligten Flansche in gleicher Weise vorzunehmen und sodann die zu beiden Flansche separat zu jeder Umfangsposition ermittelten mehreren Abstandswerte zwischen jeweiliger Dichtfläche und Referenzebene umzurechnen in die benötigten Abstandswerte zwischen den Dichtflächen beider Flansche. Dies ist mathematisch problemlos möglich, da für die Vermessung beider Flansche jeweils eine plane Referenzebene verwendet wurde und sodann mathematisch für die Bestimmung der Abstandswerte zwischen den Dichtflächen beider Flansche die jeweilige Referenzebenen in über Deckung gebracht werden können. Ein ähnliches Verfahren zur Herstellung eines Dichtungselementes ist aus DE 41 42 600 A1 bekannt.

Ein Ausführungsbeispiel der Erfindung wird anhand der nachfolgenden Figuren näher erläutert.

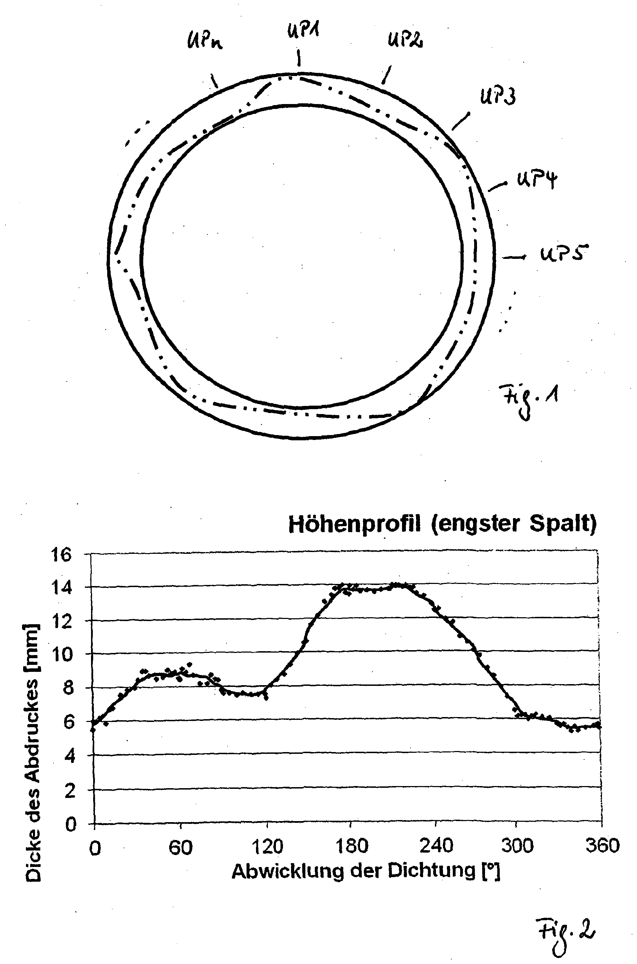

Die Figur 1 kann bei einer ersten Art der Betrachtung verstanden werden als Aufsicht auf die Dichtfläche eines Flansches, bei dem in hier symbolisch dargestellten äquidistanten Umfangspositionen UP1 bis UPn senkrecht zur Umfangstangenten und somit in radialer Richtung innerhalb des Dichtflächenbereiches mehrere Abstandswerte zwischen den einander gegenüberliegenden Flanschdichtungsflächen ausgemessen werden, wobei hier die "Strich-Zwei-Punkt-Linie" eine Verbindungslinie derjenigen Abstandswerte der einzelnen Umfangspositionen darstellt, die den kleinsten absoluten Betrag aufweisen und somit in der hier betrachteten radialen Richtung den Ort des engsten Spaltes zwischen den beiden Flanschdichtungsflächen symbolisiert. Betrachtet man den äußeren Umfang der Flanschdichtungsfläche wie sie durch Figur 1 dargestellt ist in einer Abwicklung, zum Beispiel dargestellt in einem Bereich von 0 bis 360 Grad des Umfanges gegenüber dem Mittelpunkt, so zeigt die Figur 2 über diese Abwicklung hinweg ein Höhenprofil beziehungsweise den engsten Spalt zwischen den einander gegenüberliegend angeordneten Dichtflächen unabhängig von der radialen Position dieses Spaltbereiches. Bei einem Abdruck mit einem plastisch verformbaren Material kann dieses Höhenprofil die minimale Abdruckdicke darstellen.

Erfindungsgemäß ist es nun vorgesehen, ein Dichtungselement zu fertigen, insbesondere hier ein ringförmiges Dichtungselement zu fertigen, dass an korrespondierenden Umfangspositionen und so bei gleicher Abwicklung, wie es die Figur 2 zeigt, eine von der Umfangs- bzw. Abwicklungsposition abhängige Dicke aufweist, die dem jeweils engsten Spaltmaß gemäß Linie der Figur 1 entspricht, gegebenenfalls unter Berücksichtigung eines positiven oder negativen Offset zur Sicherstellung einer gewünschten Mindestdicke des Dichtungselementes.

Hierbei wird die Dichtung so gefertigt, dass sie über ihre gesamte radiale Breite an jeder Umfangsposition, insbesondere den hier konkret beschriebenen Umfangspositionen UP1 bis UPn, ein konstantes Dickenmaß aufweist, die Dickenvariabilität des Dichtungselementes somit ausschließlich nur in Umfangsrichtung vorliegt, also hier die Dicke nur winkelabhängig ist.

Eine nach diesen Vorgaben hergestellte ringförmige Dichtung kann somit ebenso in der Figur 1 erkannt werden, wobei sodann die darin dargestellte Linie bezogen auf die betrachtete Dichtung automatisch die Linie der höchsten Verpressung zwischen den beiden Flanschdichtungsflächen symbolisiert, was ersichtlich ist, da die Dichtung zwischen den beiden Flanschdichtungsflächen jeweils am Ort des engsten Spaltes zwischen diesen kontaktiert wird.

Bei einer Befestigung der Flansche aneinander wird demnach Dichtungsmaterial aus diesem Linienbereich in umgebende Bereiche verpresst, was im vorliegenden Fall möglich ist, da in den umliegenden Bereichen neben der hier dargestellten Linie die Abstände zwischen den Dichtungsflächen der beiden Flansche größer sind als exakt auf dieser Linie.

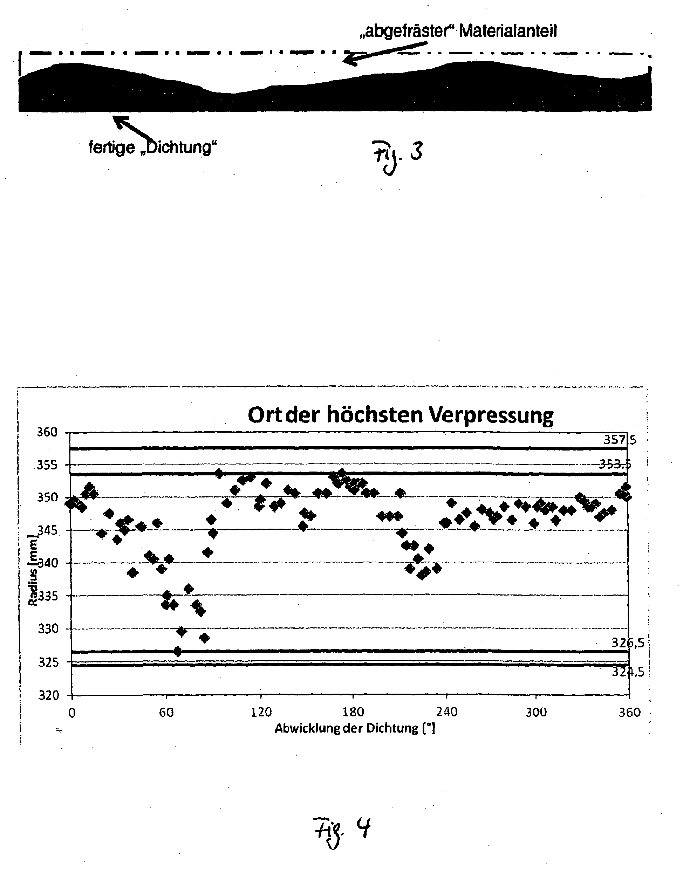

Die Figur 3 verdeutlicht, dass ein Dichtungsrohling mit über den Umfang verteilt zunächst konstanter Dicke, durch spanenden Abtrag von Material, ausgehend von der planen Oberseite gemäß den Dickenvorgaben zu jeder Umfangsposition beziehungsweise gemäß der in den Figuren dargestellten Abwicklung hergestellt werden kann.

Eine Herstellung kann dabei beispielsweise vorsehen, dass mittels einer CNC-Maschine ein Fräskopf in radialer Richtung unter Beibehaltung einer konstanten Höhe über den Dichtungsrohling verfahren wird, um so in der radialen Richtung bei der Herstellung eines ringförmigen Dichtungselementes eine konstante Dicke zu erzielen, die lediglich in Umfangsrichtung gemäß den Dickenvorgaben zu den einzelnen Umfangspositionen variiert. In gleicher Weise kann beispielsweise in Umfangsrichtung mittels einer CNC-Maschine das Dickenprofil abgetragen werden, um so in radialer Richtung eine konstante Dicke zu erreichen.

Die Figur 4 visualisiert weiterhin die ggfs. zusätzlich gemessene und gespeicherte radiale Position der in der Figur 1 dargestellten Linie, das heißt den jeweiligen radialen Abstand zum Mittelpunkt vom Ort des engsten Spaltes in Abhängigkeit der Umfangsposition, die in hier in Gradzahlen aufgetragen ist.

Es zeigt sich, dass der durch die Linie in der Figur 1 in einem ringförmigen Dichtungselement gegebener jeweilige Ort der höchsten Verpressung sowohl einen minimalen als auch einen maximalen Radiuswert aufweist, so dass es bei der Herstellung einer ringförmigen Dichtung vorgesehen ist, den inneren Durchmesser einer solchen ringförmigen Dichtung auszufertigen in Abhängigkeit vom minimalen Radiuswert des Ortes der höchsten Verpressung beziehungsweise des Ortes des minimalen Abstandswertes zwischen den Dichtflächen, gegebenenfalls unter Berücksichtigung eines Sicherheitszuschlages, der den inneren Durchmesser verkleinert.

In gleicher Weise kann der zu fertigende maximale Außendurchmesser bestimmt werden anhand der maximalen Radiusposition des Ortes der höchsten Verpressung beziehungsweise des kleinsten Abstandswertes von allen Abstandswerten, gegebenenfalls auch hier unter Berücksichtigung eines Sicherheitszuschlages, durch welchen der zu fertigende Durchmesser des Dichtungselementes vergrößert wird.

## Patentansprüche

1. Verfahren zur Herstellung eines Dichtungselementes, welches eine von der Umfangsposition (UP1, UP2, ..., UPn) abhängige Dicke aufweist, zur Dichtung einer Verbindung von zwei Flanschen, von denen wenigstens einer eine nicht-plane Dichtfläche aufweist, **dadurch gekennzeichnet, dass** an einer Vielzahl von in Umfangsrichtung wenigstens eines Flansches liegenden Umfangspositionen (UP1, UP2, ..., UPn) bei jeder der Umfangspositionen (UP1, UP2, ..., UPn) an mehreren Orten, die in einer Richtung senkrecht zur Umfangstangente hintereinander liegen, ein jeweiliger Abstandswert zwischen den einander gegenüberliegenden Dichtflächen der Flansche bestimmt wird und aus den mehreren Abstandswerten jeder Umfangsposition (UP1, UP2, ..., UPn) für jede Umfangsposition (UP1, UP2, ..., UPn) jeweils ein einziger Dickenwert ermittelt wird und in Abhängigkeit aller ermittelter einziger Dickenwerte das Dichtungselement gefertigt wird, , wobei die Dicke an jeder zu den Flanschen korrespondierenden Umfangspositionen (UP1, UP2, ..., UPn) in einer Richtung senkrecht zur Umfangstangente konstant ist und dem ermittelten Dickenwert der jeweiligen Umfangsposition (UP1, UP2, ..., UPn) entspricht.

2. Verfahren nach Anspruch 1, **dadurch gekennzeichnet, dass** ein jeder Dickenwert aus den jeweiligen Abstandswerten berechnet wird zuzüglich oder abzüglich einer Konstanten.

3. Verfahren nach einem der vorherigen Ansprüche, **dadurch gekennzeichnet, dass** aus den Abstandswerten jeder Umfangsposition (UP1, UP2, ..., UPn) ein Dickenwert ermittelt wird durch
a. Bildung des Mittelwertes aller Abstandswerte der jeweiligen Umfangsposition (UP1, UP2, ..., UPn) oder
b. Auswahl des Minimums aller Abstandswerte der jeweiligen Umfangsposition (UP1, UP2, ..., UPn).

4. Verfahren nach einem der vorherigen Ansprüche, **dadurch gekennzeichnet, dass** in Umfangsrichtung des Dichtungselementes dessen Dicke zwischen zwei zu den Flanschen korrespondierenden und benachbarten Umfangspositionen (UP1, UP2, ..., UPn) in Abhängigkeit der Dickenwerte an diesen Umfangspositionen (UP1, UP2, ..., UPn) angepasst wird.

5. Verfahren nach einem der vorherigen Ansprüche, **dadurch gekennzeichnet, dass** die Abstandswerte jeder Umfangsposition (UP1, UP2, ..., UPn) zusammen mit einem jeweiligen Koordinatenwert erfasst werden, welcher den Ort der Bestimmung in Richtung senkrecht zur Umfangstangente identifiziert wobei in Abhängigkeit wenigstens eines der Koordinatenwerte der minimale innere freie Querschnitt des Dichtungselementes und/oder der maximale Aussenquerschnitt des Dichtungselementes bestimmt wird.

6. Verfahren nach einem der vorherigen Ansprüche, **dadurch gekennzeichnet, dass** ein Dichtungselement aus einem beidseitig planen Dichtungsrohling durch Abtragen von Material hergestellt wird.

7. Verfahren nach einem der vorherigen Ansprüche, **dadurch gekennzeichnet, dass** zwischen zwei Flanschen durch Befestigung der Flansche aneinander ein zwischen den Dichtflächen der Flansche angeordnetes plastisches Material verpresst wird und hierdurch ein Abdruck des Abstandsbereiches zwischen den Dichtflächen erzeugt wird, wobei nach Entnahme des Abdruckes von dem Abdruck an jeder der Umfangspositionen (UP1, UP2, ..., UPn) die jeweiligen Abstandswerte ermittelt werden durch Vermessen der Dicke des Abdruckes an jeder korrespondierenden Umfangsposition (UP1, UP2, ..., UPn) in der Richtung senkrecht zur Umfangstangenten.

8. Verfahren nach einem der vorherigen Ansprüche 1 bis 6, **dadurch gekennzeichnet, dass** die beiden Flansche mit Abstandshaltern aneinander mit einem Abstand befestigt werden und mit einer Messvorrichtung an jeder Umfangsposition (UP1, UP2, ..., UPn) die Abstandswerte gemessen werden.

9. Verfahren nach Anspruch 8, **dadurch kennzeichnet, dass** die Messvorrichtung durch eine tastende oder optische Messvorrichtung ausgebildet ist, die an jeder Umfangsposition (UP1, UP2, ..., UPn) in einer Richtung senkrecht zur Umfangstangente zwischen die Dichtflächen der Flansche geführt wird und die mehreren Abstandwerte misst.

10. Verfahren nach Anspruch 8, **dadurch kennzeichnet, dass** die Messvorrichtung durch einen Laserscanner ausgebildet ist, der zwischen den Flanschen angeordnet wird.

11. Verfahren nach einem der vorherigen Ansprüche 1 bis 6, **dadurch gekennzeichnet, dass** an den Umfangspositionen (UP1, UP2, ..., UPn) in einer Richtung senkrecht zur Umfangstangente mehrere Abstandswerte zwischen der Dichtfläche eines der Flansche und einer planen Referenzebene ermittelt werden.

12. Verfahren nach Anspruch 11, **dadurch kennzeichnet, dass** die gleiche Art der Ermittlung auch bezüglich des anderen Flansches erfolgt und die zu beiden Flanschen separat zu jeder Umfangsposition (UP1, UP2, ..., UPn) ermittelten Abstandswerte zwischen Dichtfläche und Referenzebene umgerechnet werden in Abstandswerte zwischen den Dichtflächen beider Flansche.

## Claims

1. Method for producing a sealing element, which has a thickness dependent on the circumferential position (UP1, UP2, ..., UPn), for sealing a connection between two flanges, at least one of which has a non-planar sealing surface, **characterized in that**, at a plurality of circumferential positions (UP1, UP2, ..., UPn) lying in the circumferential direction of at least one flange, a respective spacing value between the opposite sealing surfaces of the flanges is determined at multiple locations lying one after the other in a direction perpendicular to a tangent to the circumference at each of the circumferential positions (UP1, UP2, ..., UPn), and a single thickness value is respectively determined for each circumferential position (UP1, UP2, ..., UPn) from the multiple spacing values of each circumferential position (UP1, UP2, ..., UPn) and the sealing element is produced in dependence on all of the single thickness values determined, wherein the thickness at each of the circumferential positions (UP1, UP2, ..., UPn) corresponding to the flanges is constant in a direction perpendicular to the tangent to the circumference and corresponds to the determined thickness value of the respective circumferential position (UP1, UP2, ..., UPn).

2. Method according to Claim 1, **characterized in that** the thickness value is calculated each time from the respective spacing values, plus or minus a constant.

3. Method according to one of the preceding claims, **characterized in that** a thickness value is determined from the spacing values of each circumferential position (UP1, UP2, ..., UPn) by
a. forming the mean value of all the spacing values of the respective circumferential position (UP1, UP2, ..., UPn) or
b. selecting the minimum of all the spacing values of the respective circumferential position (UP1, UP2, ..., UPn) .

4. Method according to one of the preceding claims, **characterized in that**, in the circumferential direction of the sealing element, its thickness between two adjacent circumferential positions (UP1, UP2, ..., UPn) corresponding to the flanges is adapted in dependence on the thickness values at these circumferential positions (UP1, UP2, ..., UPn).

5. Method according to one of the preceding claims, **characterized in that** the spacing values of each circumferential position (UP1, UP2, ..., UPn) are detected together with a respective coordinate value, which identifies the location of the determination in the direction perpendicular to the tangent to the circumference, wherein the minimum inner free cross section of the sealing element and/or the maximum outer cross section of the sealing element is determined in dependence on at least one of the coordinate values.

6. Method according to one of the preceding claims, **characterized in that** a sealing element is produced from a sealing blank that is planar on both sides by removing material.

7. Method according to one of the preceding claims, **characterized in that**, between two flanges, a plastic material arranged between the sealing surfaces of the flanges is pressed by fastening the flanges to one another and an impression of the spacing region between the sealing surfaces is created, wherein, after removal of the impression, the respective spacing values are determined from the impression at each of the circumferential positions (UP1, UP2, ..., UPn) by measuring the thickness of the impression at each corresponding circumferential position (UP1, UP2, ..., UPn) in the direction perpendicular to the tangent to the circumference.

8. Method according to one of the preceding Claims 1 to 6, **characterized in that** the two flanges are fastened to one another with a spacing provided by spacers and the spacing values at each circumferential position (UP1, UP2, ..., UPn) are measured with a measuring device.

9. Method according to Claim 8, **characterized in that** the measuring device is formed by a tactile or optical measuring device, which is led between the sealing surfaces of the flanges at each circumferential position (UP1, UP2, ..., UPn) in a direction perpendicular to the tangent to the circumference and measures the multiple spacing values.

10. Method according to Claim 8, **characterized in that** the measuring device is formed by a laser scanner, which is arranged between the flanges.

11. Method according to one of the preceding Claims 1 to 6, **characterized in that** multiple spacing values between the sealing surface of one of the flanges and a planar reference plane are determined at the circumferential positions (UP1, UP2, ..., UPn) in a direction perpendicular to the tangent to the circumference.

12. Method according to Claim 11, **characterized in that** the same type of determination is also performed with respect to the other flange and the spacing values between the sealing surface and the reference plane determined for both flanges separately at each circumferential position (UP1, UP2, ..., UPn) are converted into spacing values between the sealing surfaces of the two flanges.

## Revendications

1. Procédé de fabrication d'un élément d'étanchéité, qui présente une épaisseur dépendant de la position périphérique (UP1, UP2, ..., UPn), pour l'étanchéité d'un assemblage de deux brides, dont au moins une présente une face d'étanchéité non plane, **caractérisé en ce que** l'on détermine en une multiplicité de positions périphériques (UP1, UP2, ..., UPn) situées dans la direction périphérique d'au moins une bride, à chacune des positions périphériques (UP1, UP2, ..., UPn) à plusieurs endroits qui sont situés dans une direction perpendiculaire à la tangente périphérique, une valeur d'écartement respective entre les faces d'étanchéité opposées l'une à l'autre des brides et on détermine à partir des multiples valeurs d'écartement de chaque position périphérique (UP1, UP2, ..., UPn) chaque fois une valeur d'épaisseur unique et on fabrique l'élément d'étanchéité en fonction de toutes les valeurs d'épaisseur uniques déterminées, dans lequel l'épaisseur à chacune des positions périphériques (UP1, UP2, ..., UPn) correspondant aux brides est constante dans une direction perpendiculaire à la tangente périphérique et correspond à la valeur d'épaisseur déterminée de la position périphérique respective (UP1, UP2, ..., UPn).

2. Procédé selon la revendication 1, **caractérisé en ce que** l'on calcule chaque valeur d'épaisseur à partir des valeurs d'écartement respectives avec addition ou déduction d'une constante.

3. Procédé selon l'une quelconque des revendications précédentes, **caractérisé en ce que** l'on détermine une valeur d'épaisseur à partir des valeurs d'écartement de chaque position périphérique (UP1, UP2 ..., UPn), par
a. la formation d'une valeur moyenne de toutes les valeurs d'écartement de la position périphérique respective (UP1, UP2, ..., UPn) ou
b. la sélection du minimum de toutes les valeurs d'écartement de la position périphérique respective (UP1, UP2, ..., UPn) .

4. Procédé selon l'une quelconque des revendications précédentes, **caractérisé en ce que** l'on adapte dans la direction périphérique de l'élément d'étanchéité l'épaisseur de celui-ci entre deux positions périphériques (UP1, UP2, .., UPn) voisines et correspondant aux brides en fonction des valeurs d'épaisseur à ces positions périphériques (UP1, UP2, ..., UPn).

5. Procédé selon l'une quelconque des revendications précédentes, **caractérisé en ce que** l'on détecte les valeurs d'écartement de chaque position périphérique (UP1, UP2, ..., UPn) en même temps qu'une valeur de coordonnée respective, qui identifie le lieu de la détermination dans la direction perpendiculaire à la tangente périphérique, dans lequel on détermine en fonction d'au moins une des valeurs de coordonnée la section transversale intérieure libre minimale de l'élément d'étanchéité et/ou la section transversale extérieure maximale de l'élément d'étanchéité.

6. Procédé selon l'une quelconque des revendications précédentes, **caractérisé en ce que** l'on fabrique un élément d'étanchéité à partir d'une ébauche de joint plane de part et d'autre par enlèvement de matière.

7. Procédé selon l'une quelconque des revendications précédentes, **caractérisé en ce que** l'on presse entre deux brides, par fixation des brides l'une à l'autre, un matériau plastique disposé entre les faces d'étanchéité des brides et on produit ainsi un moulage de la zone d'écartement entre les faces d'étanchéité, dans lequel après l'enlèvement du moulage on détermine à partir du moulage, à chacune des positions périphériques (UP1, UP2, ..., UPn), les valeurs d'écartement respectives par la mesure de l'épaisseur du moulage à chaque position périphérique correspondante (UP1, UP2, ..., UPn) dans la direction perpendiculaire à la tangente périphérique.

8. Procédé selon l'une quelconque des revendications précédentes 1 à 6, **caractérisé en ce que** l'on fixe les deux brides l'une à l'autre à distance avec des pièces d'écartement et on mesure les valeurs d'écartement à chaque position périphérique (UP1, UP2, ..., UPn) au moyen d'un dispositif de mesure.

9. Procédé selon la revendication 8, **caractérisé en ce que** le dispositif de mesure est formé par un dispositif de mesure par balayage ou optique, qui est conduit entre les faces d'étanchéité des brides à chaque position périphérique (UP1, UP2, ..., UPn) dans une direction perpendiculaire à la tangente périphérique et qui mesure les multiples valeurs d'écartement.

10. Procédé selon la revendication 8, **caractérisé en ce que** le dispositif de mesure est formé par un scanneur laser, qui est disposé entre les brides.

11. Procédé selon l'une quelconque des revendications précédentes 1 à 6, **caractérisé en ce que** l'on détermine aux positions périphériques (UP1, UP2, ..., UPn) dans une direction perpendiculaire à la tangente périphérique plusieurs valeurs d'écartement entre la face d'étanchéité d'une des brides et un plan de référence plan.

12. Procédé selon la revendication 11, **caractérisé en ce que** l'on effectue le même type de détermination également par rapport à l'autre bride et on convertit les valeurs d'écartement déterminées séparément pour les deux brides à chaque position périphérique (UP1, UP2, ..., UPn) entre la face d'étanchéité et le plan de référence en valeurs d'écartement entre les faces d'étanchéité des deux brides.
